# EUROPÄISCHE PATENTANMELDUNG

(11) **EP 1 927 512 A2**
(43) Veröffentlichungstag der Anmeldung: **04.06.2008**
(21) Anmeldenummer: 07022455.5
(22) Anmeldetag: 20.11.2007
(51) Int. Cl.: B60Q 1/50, B60Q 5/00

(54) **Einrichtung zur Erzeugung von Audiosignalen**

(30) Priorität: 28.11.2006 DE 102006058187; 12.01.2007 DE 102007003201
(71) Anmelder: Trzmiel, Alfred, 72622 Nürtingen (DE)
(72) Erfinder: Trzmiel, Alfred, 72622 Nürtingen (DE)
(74) Vertreter: Jackisch-Kohl, Anna-Katharina

(57) **Zusammenfassung**

Elektrisch betriebene Fahrzeuge oder Hybridfahrzeuge fahren äußerst geräuscharm. Um solche Fahrzeuge so auszubilden, dass sie von Verkehrsteilnehmern zuverlässig gehört werden können, ist die Einrichtung zum Einbau in geräuschlos bzw. nahezu geräuschlos fahrende Fahrzeuge vorgesehen. Sie erzeugt wenigstens ein für die anderen Verkehrsteilnehmer hörbares Audiosignal. Beispielsweise kann ein auf einer Straße gehender Passant, ohne auf den Verkehr zu achten, das ansonsten sehr leise fahrende Fahrzeug aufgrund des Einsatzes des Audiosignales deutlich hören, so dass er wirkungsvoll vor dem herannahenden Fahrzeug gewarnt wird. Die Einrichtung eignet sich zum Einbau in nahezu geräuschlos fahrende Fahrzeuge, wobei das Audiosignal beispielsweise durch Töne, Sounds, Geräusche oder dergleichen über einen Audiogenerator erzeugt werden kann.

## Beschreibung

Die Erfindung betrifft eine Einrichtung zur Erzeugung von Audiosignalen.

Es sind elektrisch betriebene Fahrzeuge oder auch Hybrid-Fahrzeuge bekannt, die außer einem Elektromotor auch einen Kraftstoffmotor aufweisen. Die Elektrofahrzeuge sowie auch die Hybridfahrzeuge, wenn sie mittels des Elektromotors angetrieben werden, haben den Vorteil, daß sie sehr geräuscharm fahren. Allerdings hat diese Geräuscharmut den Nachteil, daß solche Fahrzeuge von anderen Verkehrsteilnehmern, beispielsweise von Fußgängern, Radfahrern und dergleichen, nicht oder nur sehr schlecht gehört werden. Es besteht daher für diese Verkehrsteilnehmer eine große Unfallgefahr.

Der Erfindung liegt die Aufgabe zugrunde, solche Fahrzeuge so auszubilden, daß sie auch von anderen Verkehrsteilnehmern zuverlässig gehört werden können.

Diese Aufgabe wird bei der gattungsgemäßen Einrichtung mit den kennzeichnenden Merkmalen des Anspruches 1 gelöst.

Die Einrichtung wird in geräuschlos bzw. nahezu geräuschlos fahrende Fahrzeuge eingebaut. Die Einrichtung erzeugt wenigstens ein Audiosignal, das von den anderen Verkehrsteilnehmern gehört werden kann. Wenn beispielsweise ein Passant eine Straße, ohne auf den Verkehr zu achten, überqueren will, hört er das ansonsten sehr leise fahrende Fahrzeug aufgrund des Einsatzes der erfindungsgemäßen Einrichtung deutlich, so daß er vor dem Fahrzeug gewarnt und nicht überfahren wird. Die Art des Audiosignals ist hierbei nicht wesentlich. Entscheidend ist nur, daß der Verkehrsteilnehmer überhaupt ein Audiosignal hört.

Weitere Merkmale der Erfindung ergeben sich aus den weiteren Ansprüchen, der Beschreibung und der Zeichnung.

Die Erfindung wird anhand eines in der Zeichnung dargestellten Ausführungsbeispieles näher erläutert. Es zeigen
- Fig. 1: in Stirnansicht eine erfindungsgemäße Einrichtung zur Erzeugung von Audiosignalen,
- Fig. 2: die erfindungsgemäße Einrichtung gemäß Fig. 1 in Seitenansicht.

Die im folgenden beschriebene Einrichtung ist ein Audiogenerator, der dafür dient, geräuschlos oder nahezu geräuschlos arbeitenden Fahrzeugen einen Sound zu verleihen, so daß dieses Fahrzeug von anderen Verkehrsteilnehmern gehört werden kann. Insbesondere ist dadurch ein Schutz für Fußgänger gegeben, die beispielsweise eine Straße überqueren wollen und das geräuschlose Fahrzeug sonst nicht hören würden. Die Art des vom Audiogenerator erzeugten Geräuschs kann unterschiedlichster Natur sein. Wesentlich ist, daß dieses dem Fahrzeug vermittelte Geräusch so geschaffen ist, daß es vom Verkehrsteilnehmer zuverlässig gehört werden kann. Dies gilt nicht nur für Fußgänger, sondern beispielsweise auch für Fahrradfahrer, Motorradfahrer oder auch Autofahrer. Auch sie werden auf das mit dem Audiogenerator ausgestattete Fahrzeug aufmerksam gemacht, so daß die Gefahr eines Zusammenstoßes mit einem solchen Fahrzeug vermieden oder erheblich reduziert ist.

Welcher Art der Sound ist, den der Audiogenerator erzeugt, ist für die Frage der Verkehrssicherheit nicht von Bedeutung. Entscheidend ist, daß der Verkehrsteilnehmer überhaupt ein Geräusch hört und so auf das Fahrzeug aufmerksam wird.

Die Audiogenerator kann beispielsweise ein Motorgeräusch erzeugen, beispielsweise das Geräusch einer Harley-Davidson für einen Roller oder ein Sportwagengeräusch für ein Hybridfahrzeug, das einen Kraftstoffmotor und einen Elektromotor aufweist. Dies sind nur Beispiele für eine mögliche Geräuscherzeugung des Audiogenerators. Der Audiogenerator ist vorteilhaft so ausgebildet, daß er alle Arten von Geräuschen erzeugen kann, sofern sie vom Gesetzgeber zugelassen sind. Der Audiogenerator ist allerdings im einfachsten Fall so gestaltet, daß er nur einen einzigen Sound erzeugt. Bei einer komfortableren Gestaltung ist der Audiogenerator so ausgebildet, daß der Benutzer aus einer größeren Zahl von Geräuschen auswählen kann.

Der Audiogenerator kann in einem Gehäuse untergebracht, auf einer bereits im Fahrzeug vorhandenen Platine angebracht oder beispielsweise in einen freien Steckplatz in einer Steuerung im Motorraum des Fahrzeuges gesteckt werden. Der Audiogenerator hat wenigstens einen Speicher, auf dem der entsprechende Sound bzw. das Geräusch gespeichert ist. Dieser Speicher kann zum Beispiel ein Speicherchip, ein Mikrochip und dergleichen sein.

Der Audiogenerator hat vorteilhaft wenigstens eine Schnittstelle. Dadurch ist es möglich, daß der Benutzer des Audiogenerators seinen Sound selbst wählen und gegebenenfalls aus dem Internet auswählen und herunterladen kann.

Der Audiogenerator ist ein einfaches, nur minimalen Raum beanspruchendes und kostengünstiges Bauteil. Als Lautsprecher zur Wiedergabe des Sounds wird vorteilhaft ein Piezoelement eingesetzt. Es kann vorteilhaft an der Karosserie des Fahrzeuges so angebracht sein, daß die Karosserie beim Bewegen des Piezoelementes zum Schwingen angeregt wird. In diesem Falle dient die Karosserie als Lautsprechermembran. Selbstverständlich kann zur Wiedergabe des gespeicherten Sounds auch ein herkömmlicher Lautsprecher eingesetzt werden.

Der Sound bzw. das Geräusch werden vorteilhaft in Abhängigkeit von der Fahrgeschwindigkeit erzeugt und/oder geändert. Das Drehzahlsignal kann aus der CPU des Fahrzeuges oder beispielsweise auch aus der Stellung eines Potentiometers im E-Gas des Fahrzeuges (E-Gas-Signal) entnommen werden.

Der Audiogenerator kann auch als Nachrüstsatz vorgesehen sein, so daß schon auf dem Markt befindliche Elektrofahrzeuge und Hybridfahrzeuge mit dem Audiogenerator ausgerüstet werden können. Dieser Nachrüstsatz ist vorteilhaft nicht größer als eine Streichholzschachtel. Dieses Nachrüstteil kann leicht montiert werden, hat nur kleine Abmessungen und geringes Gewicht, läßt sich beispielsweise leicht aufstecken oder auf sonstige Weise im Fahrzeuge einbauen.

Im folgenden wird beispielhaft eine Ausführungsform eines Audiogenerators beschrieben. Dieses Ausführungsbeispiel ist nicht beschränkend zu verstehen, sondern soll eine mögliche Ausgestaltung zeigen.

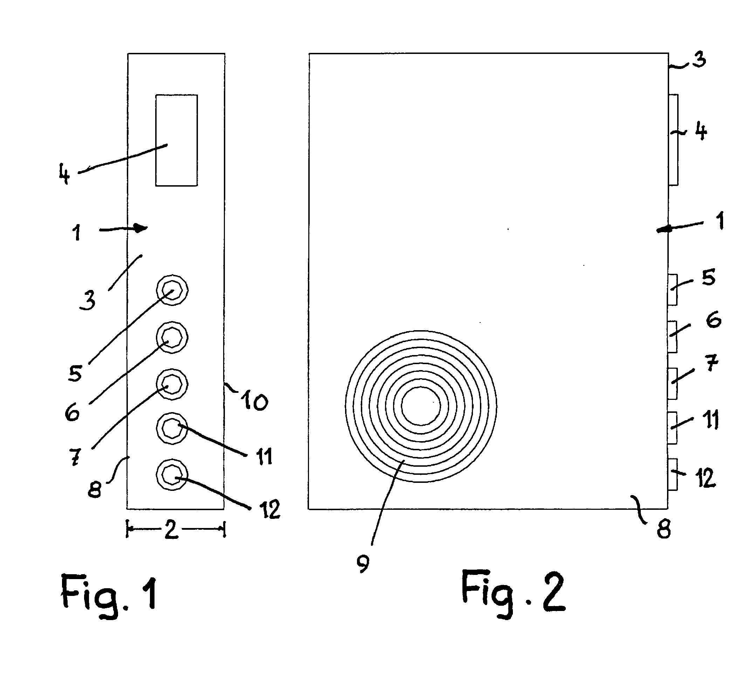

Der Audiogenerator gemäß den Fig. 1 und 2 hat ein Gehäuse 1, das beispielhaft quaderförmige Ausbildung hat. Es hat dadurch nur eine geringe Breite 2, so daß der Audiogenerator problemlos im Fahrzeug untergebracht werden kann. Ist das Fahrzeug beispielsweise ein Kleinwagen, dann läßt sich das Gehäuse platzsparend im Handschuhfach, unter dem Fahrersitz oder im Kofferraum anbringen. Ist das Fahrzeug beispielsweise ein Fahrrad oder ein Moped, kann es am Fahrradrahmen, auf dem Fahrradlenker oder auf dem Mopedlenker montiert werden. Selbstverständlich kann das Gehäuse 1 auch jede andere Form haben. Insbesondere läßt sich die Ausbildung des Gehäuses 1 auf den jeweiligen Einbauort abstimmen.

Das Gehäuse kann aus metallischem Werkstoff oder auch aus entsprechend beständigem Kunststoff bestehen. Die Verwendung von Kunststoff bietet sich an, wenn das Gehäuse 1 für Fahrräder, Roller, Moped und dergleichen verwendet wird, bei denen das Gehäuse 1 den Umgebungseinflüssen ausgesetzt ist. Wird hingegen die Einrichtung innerhalb eines Kraftfahrzeuges eingesetzt, kann auch ein anderes, insbesondere kostengünstiges Material für das Gehäuse verwendet werden.

Das Gehäuse 1 ist an einer Seitenwand, vorzugsweise an seiner schmalen Stirnwand 3, mit Anschlüssen und Reglern versehen. So ist ein Steckanschluß 4 für ein Übertragungskabel an der Stirnwand 3 vorgesehen. An diesen Anschluß 4 kann das Übertragungskabel angeschlossen werden, mit dem der Audiogenerator mit einem PC verbunden werden kann, um über das Internet Geräusche, Sounds und dergleichen überspielen zu können. Vorteilhaft wird der Anschluß 4 durch eine USB-Schnittstelle, vorzugsweise eine USB-2-Schnittstelle, gebildet. Dies hat den Vorteil, daß an den Anschluß 4 auch ein USB-Stick angeschlossen werden kann, auf dem die entsprechenden Geräusche, Sounds und dergleichen gespeichert sind. In diesem Falle können die entsprechenden Dateien vom USB-Stick in den Audiogenerator überspielt werden. Dies hat den Vorteil, daß der Benutzer des Audiogenerators zuhause die von ihm gewünschten Audiodateien aus dem Internet herunterladen und auf den USB-Stick überspielen kann. Der Audiogenerator muß darum nicht vom Fahrzeug entfernt und zum PC gebracht werden.

Im Gehäuse 1 befindet sich wenigstens ein Speicher, der eine Festplatte, ein Speicher- oder ein Mikrochip, ein Flashspeicher oder dergleichen sein kann. Ein Flashspeicher hat den Vorteil, daß er gegen Erschütterungen unempfindlich ist. Flashspeicher haben ausreichend große Kapazitäten, so daß auf ihnen auch große Audiodateien gespeichert werden können.

Es ist ferner möglich, die Audiodateien auf Flashspeicherkarten zu speichern, wie sie bei Fotoapparaten oder auch Videokameras bekannt sind. Die Flashspeicherkarten können dem Gehäuse 1 entnommen und beispielsweise in einen Kartenleser des PCs zuhause gesteckt werden. Dann können problemlos aus dem Internet die entsprechenden Audiodateien heruntergeladen und auf den Flashspeicherkarten gespeichert werden.

Unterhalb des Anschlusses 4 befindet sich ein Lautsprecheranschluß 5, an den ein externer Lautsprecher angeschlossen werden kann. Dies ist dann vorteilhaft, wenn der Audiogenerator innerhalb des Fahrzeuges eingebaut ist und das entsprechende Geräusch oder der entsprechende Ton nach außen gelangen soll. Dann kann ein Lautsprecher, der sich an der Außenseite des Kraftfahrzeuges befindet, an den Lautsprecheranschluß 5 angeschlossen werden, so daß der entsprechende Sound nicht innerhalb des Fahrzeuges, sondern außen über den externen Lautsprecher abgegeben wird. Das Gehäuse 1 kann mit weiteren Lautsprecheranschlüssen versehen sein, so daß auch mehr als ein externer Lautsprecher verwendet werden kann.

Unterhalb des Lautsprecheranschlusses 5 befindet sich an der Stirnwand 3 ein Signalanschluß 6, an den ein Schalter zum Ein- bzw. Ausschalten des Audiogenerators angeschlossen werden kann.

Unterhalb des Signalanschlusses 6 befindet sich in der Stirnwand 3 ein Anschluß 7 für einen externen Lautstärkeregler, um die Lautstärke des Lautsprechers individuell einstellen zu können. Der Anschluß 7 ist so geschaltet, daß mit ihm die an den Anschluß 5 angeschlossene externe Lautsprecherquelle geregelt werden kann. Darüber hinaus kann im Gehäuse 1 wenigstens ein interner Lautsprecher vorgesehen sein, der über den an den Anschluß 7 angeschlossenen Lautstärkeregler ebenfalls geregelt werden kann. Je nach Größe des Gehäuses 1 können ein oder mehrere interne Lautsprecher vorgesehen sein. In der Gehäuseseitenwand 8 befindet sich wenigstens eine Lautsprecheröffnung 9, über die der vom internen Lautsprecher abgegebene Sound nach außen gelangen kann. Je nach Zahl der internen Lautsprecher können in der Seitenwand 8 weitere Lautsprecheröffnungen vorgesehen sein. Vorteilhaft ist auch an der gegenüberliegenden Seitenwand 10 des Gehäuses 1 wenigstens eine Lautsprecheröffnung vorgesehen.

Unterhalb des Anschlusses 7 für den Lautstärkeregler befindet sich in der Stirnwand 3 ein Anschluß 11 für einen Drehzahlsignalgeber. Damit wird über den Anschluß 11 ein Drehzahlsignal der Einrichtung zugeführt, ähnlich dem Tachometersignal eines Fahrradtachometers. Dadurch kann beispielsweise die Einrichtung so gesteuert werden, daß der interne und/oder externe Lautsprecher erst dann eingeschaltet wird, wenn das Fahrzeug eine bestimmte Geschwindigkeit überschreitet. Ebenso kann über diesen Anschluß der interne und/oder externe Lautsprecher abgeschaltet werden, wenn die Fahrzeuggeschwindigkeit einen bestimmten Wert unterschreitet. Ist an den Anschluß 11 kein Drehzahlsignalgeber angeschlossen, dann wird die Lautstärke über den an den Anschluß 7 angeschlossenen Lautstärkeregler vorgenommen.

Schließlich ist an der Stirnwand 3 unterhalb des Anschlusses 11 ein Anschluß 12 für die Strom/Spannungsversorgung der Einrichtung vorgesehen. Über diesen Anschluß 12 kann die Einrichtung an eine Fahrzeugbatterie angeschlossen werden.

Es ist grundsätzlich möglich, die Einrichtung auch durch wenigstens eine Batterie zu betreiben. Sie befindet sich leicht entnehmbar hinter einer (nicht dargestellten) Klappe in einer der Seitenwände des Gehäuses 1. Anstelle der Batterie kann auch wenigstens ein Akku verwendet werden, der zusätzlich zu einer äußeren Strom/Spannungsversorgung vorgesehen sein kann. Wird der Audiogenerator über die Batterie des Fahrzeuges betrieben, ist es vorteilhaft, wenn damit gleichzeitig auch der im Gehäuse 1 befindliche Akku aufgeladen wird. Dann kann der Audiogenerator auch ohne eine äußere Strom/Spannungsquelle betrieben werden.

Mit dem beschriebenen Audiogenerator können je nach Ausgestaltung unterschiedliche Effekte erzielt werden. So kann beispielsweise beim Beschleunigen oder Verzögern des Fahrzeuges eine Tonänderung oder eine Geräuschänderung erzeugt werden. Dies ist möglich, weil über den Anschluß 11 des Audiogenerators mit dem Drehzahlsignalgeber verbunden ist. So kann auch im Stillstand oder während des Fahrens mit einer konstanten oder annähernd konstanten Geschwindigkeit ein eigener Ton bzw. ein eigenes Geräusch erzeugt werden. Der Benutzer kann nach seinem Belieben unterschiedlichste Arten von Tönen, Sounds, Geräuschen und dergleichen im Speicher ablegen und im Einsatz abrufen. Die Lautstärke kann manuell und/oder automatisch in Abhängigkeit von der Fahrgeschwindigkeit geändert werden.

Die Töne, Sounds, Geräusche und dergleichen lassen sich als Audiodateien beispielsweise vom Internet über einen Computer oder über ein Handy herunterladen und dann auf den Speicher im Gehäuse 1 aufspielen. Als Alternative oder zusätzlich können die Flashspeicherkarten eingesetzt werden, auf die die gewünschten Audiodateien aufgespielt werden und die in einen entsprechenden Einschub im Gehäuse 1 gesteckt werden. Dann können die Audiodateien unmittelbar von der Flashspeicherkarte abgespielt werden.

## Patentansprüche

1. Einrichtung zur Erzeugung von Audiosignalen,
**dadurch gekennzeichnet, daß** die Einrichtung zum Einbau in geräuschlos bzw. nahezu geräuschlos fahrende Fahrzeuge vorgesehen ist und wenigstens ein für die anderen Verkehrsteilnehmer hörbares Audiosignal erzeugt.

2. Einrichtung nach Anspruch 1,
**dadurch gekennzeichnet, daß** die Einrichtung wenigstens einen Speicher für das Audiosignal aufweist, der vorteilhaft ein Speicher- oder Mikrochip oder eine Festplatte oder eine Flash-Speicherkarte ist.

3. Einrichtung nach Anspruch 1 oder 2,
**dadurch gekennzeichnet, daß** zum Überspielen des Audiosignals wenigstens eine Schnittstelle (4) vorgesehen ist.

4. Einrichtung nach Anspruch 3,
**dadurch gekennzeichnet, daß** die Schnittstelle (4) eine USB-Schnittstelle oder eine Firewire-Schnittstelle ist.

5. Einrichtung nach einem der Ansprüche 1 bis 4,
**dadurch gekennzeichnet, daß** die Einrichtung als Platinensteckteil ausgebildet ist.

6. Einrichtung nach einem der Ansprüche 1 bis 5,
**dadurch gekennzeichnet, daß** die Einrichtung auf einer Platine des Fahrzeuges vorgesehen ist.

7. Einrichtung nach einem der Ansprüche 1 bis 6,
**dadurch gekennzeichnet, daß** die Einrichtung ein Drehzahlsignal des Fahrzeuges erhält, das vorteilhaft aus einer CPU des Fahrzeuges oder aus der Stellung eines Gaspedals des Fahrzeuges abgeleitet wird.

8. Einrichtung nach einem der Ansprüche 1 bis 7,
**dadurch gekennzeichnet, daß** die Einrichtung als Lautsprecher wenigstens ein Piezoelement aufweist, das vorteilhaft so an der Karosserie des Fahrzeuges angebracht ist, dass die Karosserie als Lautsprechermembran dient.

9. Einrichtung nach einem der Ansprüche 1 bis 8,
**dadurch gekennzeichnet, daß** die Einrichtung in einem Gehäuse (1) untergebracht ist, das vorzugsweise mindestens einen Anschluss (5) für wenigstens einen externen Lautsprecher und/oder einen Anschluss (6) für einen Ein/Ausschalter und/oder einen Anschluss (7) für einen Lautstärkeregler aufweist.

10. Einrichtung nach einem Anspruch 9,
**dadurch gekennzeichnet, daß** das Gehäuse (1) einen Anschluss (11) für einen Drehzahlsignalgeber und/oder einen Anschluss (12) für die Strom/Spannungsversorgung und/oder wenigstens einen Einschub für die Flash-Speicherkarte aufweist.
